# EUROPÄISCHE PATENTSCHRIFT

(11) **EP 0 933 402 B1**
(45) Veröffentlichungstag und Bekanntmachung des Hinweises auf die Patenterteilung: **19.09.2001**
(21) Anmeldenummer: 99100471.4
(22) Anmeldetag: 12.01.1999
(51) Int. Cl.: C09B 7/10

(54) **Verfahren zur Herstellung von 4,4'-Dimethyl-6,6'-dichlorthioindigo**
Process for the preparation of 4,4'-dimethyl-6,6'-dichlorothioindigo
Procédé pour la préparation du diméthyl-4,4'-dichloro-6,6'-thioindigo

(30) Priorität: 21.01.1998 DE 19802081
(43) Veröffentlichungstag der Anmeldung: 04.08.1999
(73) Patentinhaber: Clariant GmbH, 65929 Frankfurt am Main (DE)
(72) Erfinder: Bauer, Wolfgang Dr., 63477 Maintal (DE); Bäumler, Uwe Dr., 60386 Frankfurt (DE); Kurz, Hans Dr., 61184 Karben (DE); Kreutzer, Hans-Peter, 61130 Nidderau (DE)

(56) Entgegenhaltungen:
- EP-A- 0 018 008
- EP-A- 0 056 867
- DE-A- 3 117 055
- DE-A- 3 117 056
- FR-A- 2 300 116

## Beschreibung

Die vorliegende Erfindung betrifft ein Verfahren zur Herstellung von 4,4'-Dimethyl-6,6'-dichlorthioindigo der Formel (I) 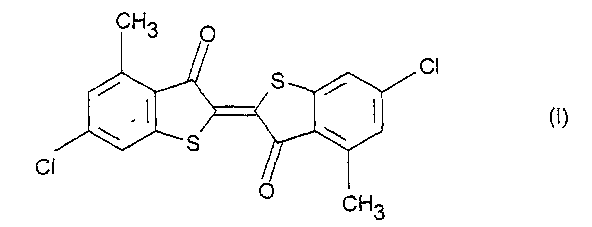 in einer stabilen Kristallmodifikation ( Modifikation I), welche im Röntgenbeugungsdiagramm (CuKₐ - Strahlung) Linien bei folgenden
Beugungswinkeln 2 θ (°) aufweist:
Linien starker Intensität: 25,99; 27,26
Linien mittlerer Intensität: 10,27; 12,48; 22,39; 23,91; 24,82; 28,87.

Die stabile Kristallmodifikation I des Pigments der Formel I ist für den Lack- und Kunststoffbereich und insbesondere für Kosmetik-Anwendungen geeignet. Verfahren zur Herstellung von Thioindigo-Derivaten, insbesondere 4,4'-Dimethyl-6,6'-dichlorthioindigo (C.I.Pigment Red 181, D & C Red 30) und 4,4'-7,7'-Tetrachlorthioindigo (C.I. Pigment Red 88) sind seit Jahrzehnten bekannt.

Die Herstellung dieser Thioindigo-Derivate erfolgt im allgemeinen durch Oxidation von entsprechend substituierten 3-Hydroxy-thionaphthen-Derivaten der Formel II (s. beispielsweise W. Herbst u. K. Hunger, Industrielle Organische Pigmente, VCH Weinheim,1987, S. 487-492).

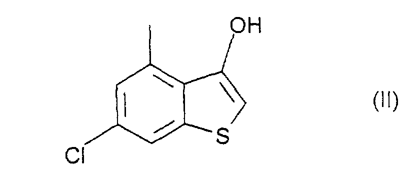

Als Oxidationsmittel kommen dabei Sauerstoff in Gegenwart von Übergangsmetallkatalysatoren (DE 3 117 055), Eisen(III)-Salze (DE 197 162, DE 194 237), Chlorsulfonsäure (DE 241 910), Alkali- oder Ammoniumperoxodisulfate
(DE 2 504 935), Nitroarensulfonsäure (EP 56 867) oder Dinatrium-polysulfid (US-PS 2 158 032) in Betracht. Neben den genannten Herstellungsverfahren für die Rohpigmente sind beispielsweise folgende Verfahren bekannt, nach denen die erhaltenen rohen Thioindigoverbindungen der Formel I in eine geeignete Pigmentform gebracht werden:
- durch Mahlen mit Salz (DE 1 137 156),
- durch Umfällen aus Schwefelsäure oder Chlorsulfonsäure und anschließende Behandlung mit organischen Lösungsmitteln (DE 2 504 962),
- durch Mahlen des Rohpigments in Gegenwart von Basen (DE 2 043 820),
- durch Finish mit organischen Lösungsmitteln wie Nitrobenzol in Gegenwart von oberflächenaktiven Substanzen (DE 3 324 879),
- durch Überführen des Rohpigments in die Leukoverbindung in Gegenwart von Tensiden und anschließende Reoxidation (DE 3 117 056, DE 2 916 400) und
- durch Einwirken von Scherkräften bei der Oxidation der Leukoverbindung in Gegenwart von Dithionit (EP-A-0 018 008).

Allen genannten Verfahren ist gemeinsam, daß zusätzlich zur Synthese der Thioindigoverbindung weitere Verfahrensschritte erforderlich sind, um die gewünschten Pigmenteigenschaften zu erzielen. Dadurch entstehen wirtschaftliche und ökologische Nachteile durch Ausbeuteverluste und durch Belastung des Abwassers oder der Abluft, beispielsweise beim Finish mit organischen Lösungsmitteln wie Nitrobenzol in Gegenwart von oberflächenaktiven Substanzen (DE 3 324 879), bei der Isolierung der Leukoverbindung (DE 3 117 056) oder durch die Regeneration organischer Lösungsmittel (DE 3 324 879).

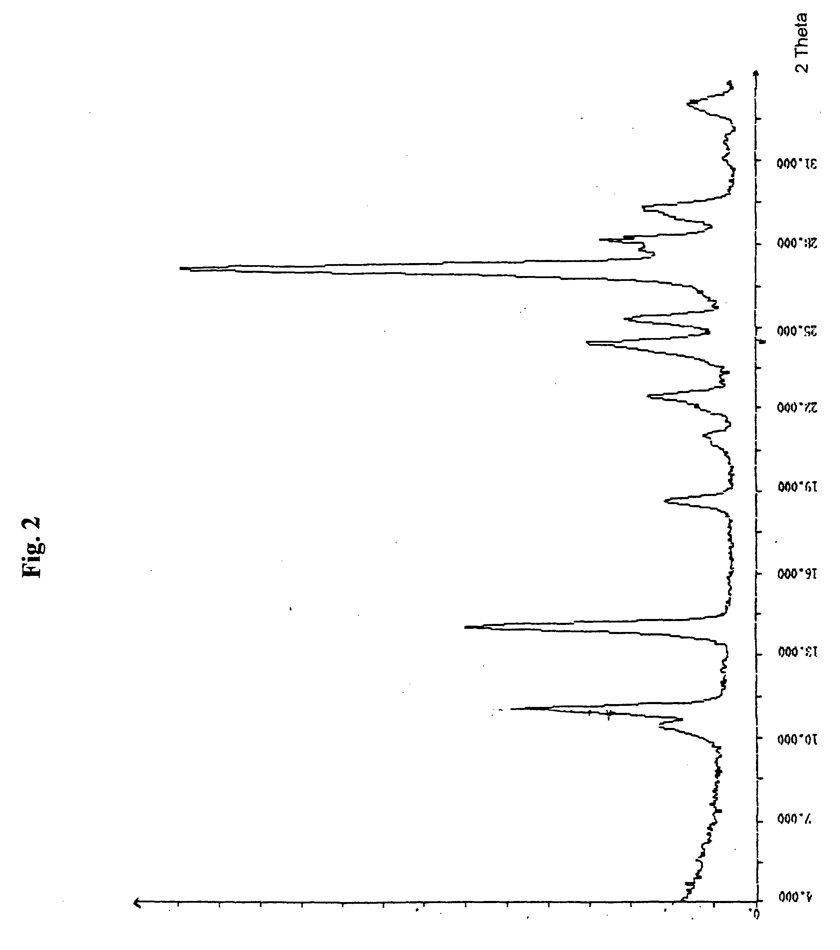

Bei der Herstellung des Pigments der Formel I nach bislang üblichen Methoden entstehen weitere anwendungstechnische und wirtschaftliche Probleme dadurch, daß eine instabile Kristallmodifikation II in unkontrollierbaren Anteilen anfällt, welche im Röntgenbeugungsdiagramm (CuK_{α} - Strahlung) Linien bei folgenden Beugungswinkeln 2 θ (°) zeigt:
Linien starker Intensität: 27,1
Linien mittlerer Intensität: 10,99; 13,99; 18,60; 22,41; 24,33; 25,25; 28,06, 29,19.
Das entsprechende Röntgenbeugungsdiagramm ist in Figur 2 dargestellt. Fällt das Pigment der Formel I in der instabilen Kristallmodifikation II an, weist es eine gelbstichige und unerwünscht trübe Nuance auf, welche insbesondere für den Kosmetik-Bereich ungeeignet ist.

Aufgabe der vorliegenden Erfindung war es daher, ein Verfahren zur Herstellung von 4,4'-Dimethyl-6,6'-dichlorthioindigo zur Verfügung zu stellen, das die Nachteile der bisher bekannten Verfahren vermeidet und es gestattet, die ThioindigoVerbindung der Formel I auf direktem Wege in einer gut dispergierbaren, farbstarken und brillanten Pigmentform mit der stabilen Kristallmodifikation I herzustellen.

Überraschenderweise wurde gefunden, daß bei der Oxidation von 3-Hydroxy-4-methyl-6-chlorthionaphthen der Formel II 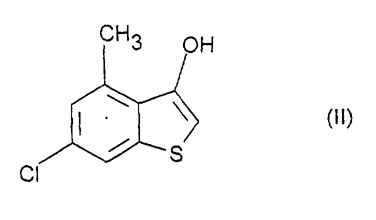 die Thioindigoverbindung der Formel I als gut dispergierbares, farbstarkes und brillantes Pigment mit der stabilen Kristallmodifikation I erhalten wird, wenn die eingesetzte Verbindung der Formel II eine mittlere Teilchengröße D₅₀ von maximal 20 µm aufweist.

Gegenstand der Erfindung ist daher ein Verfahren zur Herstellung von 4,4'-Dimethyl-6,6'-dichlorthioindigo der Formel I 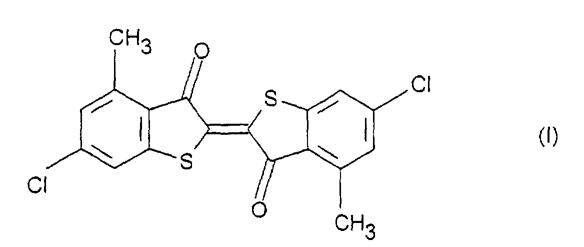 in der stabilen Kristallmodifikation I, welche im Röntgenbeugungsdiagramm (CuK_{α}-Strahlung) Linien bei folgenden Beugungswinkeln 2 θ (°) aufweist:
Linien starker Intensität: 25,99; 27,26
Linien mittlerer Intensität: 10,27; 12,48; 22,39; 23,91; 24,82; 28,87,
dadurch gekennzeichnet, daß 3-Hydroxy-4-methyl-6-chlorthionaphthen der Formel II 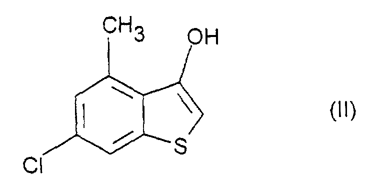 eine mittlere Teilchengröße D₅₀ von maximal 20 µm aufweist und mit einem Oxidationsmittel zu dem Pigment der Formel I oxidiert wird.

Vorzugsweise besitzt das eingesetzte Thionaphthen-Derivat der Formel II eine Teilchengröße von maximal 15 µm. Eine Untergrenze der Teilchengröße ist für den erfindungsgemäßen Zweck nicht erforderlich. Technisch erreichbar sind beispielsweise Teilchengrößen von 0,01 µm.

Als Oxidationsmittel kommen beispielsweise in Betracht: Eisen(III)-Salze wie Eisen(III)-chlorid, Eisen(III)-sulfat, Hexacyanoferrat(III), (lll), Nitroverbindungen wie 3-Nitrobenzolsulfonsäure, (Luft)Sauerstoff, Ozon, Percarbonate, Perborate, Polysulfide, insbesondere Alkalipolysulfid, wie z.B. Dinatriumpolysulfid oder Dikaliumpolysulfid.

Das erfindungsgemäße Verfahren kann in einem organischen Lösungsmittel oder Lösungsmittelgemisch durchgeführt werden. Als geeignete Lösungsmittel kommen z.B. Alkohole, insbesondere Methanol oder Ethanol, Glykole wie Ethylenglykol, Di-und Polyglykole, wie z. B. Diethylenglykol, Triethylenglykol, Glykolether, wie z. B. Methylglykol, Butylglykol, Methyldiglykol, Ethylenglykoldimethylether, Harnstoffderivate, wie z. B . Tetramethylharnstoff, Säureamide, wie z. B. Dimethylformamid, N-Methylpyrrolidon, oder Sulfoxide, wie z. B. Dimethylsulfoxid, Toluol oder Xylol in Betracht.

Als ein Lösungsmittelgemisch kann z. B. Wasser im Gemisch mit einem oder mehreren mit Wasser teilweise oder vollständig mischbaren Lösungsmitteln verwendet werden.

Da jedoch das erfindungsgemäße Verfahren überraschenderweise auch in Wasser hervorragende Ergebnisse liefert, ist die Durchführung des erfindungsgemäßen Verfahrens in Wasser ohne Zusatz organischer Lösungsmittel besonders bevorzugt, um die durch den Einsatz organischer Lösungsmittel bedingten Nachteile, z. B. Lösungsmittelregeneration oder Abwassernachbehandlung, zu vermeiden.

Die erfindungsgemäße Umsetzung kann bei einer Temperatur von 30 bis 150°C, vorzugsweise von 50 bis 100°C, durchgeführt werden.

Die Menge an Oxidationsmittel kann 2 bis 5, vorzugsweise 2 bis 3, Oxidationsequivalente pro Mol Verbindung der Formel (II) betragen.

Bei der Herstellung von 3-Hydroxy-4-methyl-6-chlorthioindigo der Formel II fällt diese Verbindung mit einer Korngröße von bis zu 100 µm an. Aus einem Produkt mit dieser Teilchengröße kann das für das erfindungsgemäße Verfahren benötigte Edukt mit Teilchengrößen von maximal 20 µm, vorzugsweise maximal 15 µm, in an sich bekannter Weise durch trockene oder nasse Teilchenzerkleinerung hergestellt werden. Derartige Zerkleinerungsverfahren können beispielsweise in geeigneten, an sich bekannten Mahl- oder Dispergiervorrichtungen, beispielsweise Sandmühlen, Perlmühlen, Ultraturrax-, Supraton- oder Cavitron-Geräten oder durch Anwendung von Ultraschall durchgeführt werden. Es ist vorteilhaft, die Zerkleinerung in einem flüssigen, insbesondere wäßrigen Medium durchzuführen und das zerkleinerte Produkt in Form dieser flüssigen, insbesondere wäßrigen, Dispersion bei dem erfindungsgemäßen Verfahren einzusetzen.

Eine ganz besonders bevorzugte Ausgestaltung des erfindungsgemäßen Verfahrens besteht darin, daß das Ausgangsmaterial der Formel (II) eine mittlere Teilchengröße von maximal 15 µm besitzt und in rein wäßrigem Reaktionsmedium mit Dinatriumpolysulfid in Gegenwart eines Tensids oder Tensidgemisches oxidiert wird.
Geeignete Tenside kommen beispielsweise aus der Reihe der anionischen und nichtionischen Tenside und werden beispielsweise in einer Menge von 0,01 bis 20 Gew.-%, vorzugsweise 0,1 bis 10 Gew.-%, bezogen auf die Verbindung der Formel (II), eingesetzt. Dabei kann das Tensid vor oder nach dem Zerkleinerungsvorgang zugesetzt werden.
Eine Übersicht über geeignete nichtionogene oder anionische Tenside findet sich beispielsweise in "Ullmann's Encyklopädie der Technischen Chemie", 4. Auflage, Band 10, Seiten 449 ff., sowie Band 22, Seiten 455 ff., oder bei E. H. Daruwalla in K. Venkataraman, "The Chemistry of Synthetic Dyes", Vol. VII, Seiten 86 bis 92 (1994).
Beispiele für anionische Tenside sind: Ligninsulfonat, Alkansulfonate, Olefinsulfonate, Estersulfonate, Alkylarylsulfonate, Alkylsulfate, Ethersulfate, Fettalkoholsulfate sowie Phenolsulfonsäure-/Formaldehyd-Kondensate und Naphthalinsulfonsäure-/Formaldehyd-Kondensationsprodukte. Nichtionische Tenside sind besonders bevorzugt, insbesondere solche aus der Reihe der Alkylphenolpolyglykolether und deren Kondensationsprodukten mit Phenol und Formaldehyd sowie der Ethoxylierungsprodukte von Fettsäuren, Fettsäureamiden, Fettaminen, Fettalkoholen oder Alkylphenolen.
Ganz besonders bevorzugte nichtionische Tenside sind Oxethylierungsprodukte von Fettalkoholen, Fettsäuren, Fettsäureamiden, Fettaminen, Alkylphenolen oder Polypropylenglykolen, beispielsweise Fettalkohol-polyglykolether (®Genapol O-Marken, Genapol X-Marken, Genapol-C-Marken, Genapol T-Marken der Firma Clariant AG);
Polypropylenglykol-polyglykolether (Genapol PF-Marken, Genapol PN 30, Genapol PL 120 der Firma Clariant AG);
Nonylphenol-polyglykolether (®Arkopal N-Marken der Firma Clariant AG); Tributylphenol-polyglykolether (®Sapogenat T-Marken der Firma Clariant AG); Fettamin-polyglykolether (®Genamin C-Marken, Genamin O-Marken, Genamin S- Marken, Genamin-T-Marken der Firma Clariant AG).

Die Verwendung einer wäßrigen Dispersion des Edukts der Formel (II) mit einer mittleren Teilchengröße von maximal 20 µm, insbesondere maximal 15 µm, die ein nichtionogenes Tensid oder mehrere nichtionogene Tenside enthält, ist eine besonders bevorzugte Ausführungsform des erfindungsgemäßen Verfahrens.

Die Verbindung der Formel (II) ist bekannt und kann nach den für diese Verbindungsklasse bekannten Syntheseverfahren hergestellt werden (s. beispielsweise K. Venkataraman, The Chemistry of Synthetic Dyes, Vol. II, Academic Press, New York, 1952, S.1033/1034; W. Herbst u. K. Hunger, Industrielle Organische Pigmente, VCH Weinheim, 1987, S. 487- 492).

Im Vergleich zu den bereits bekannten Verfahren zur Herstellung von 4,4'-Dimethyl-6,6'-dichlorthioindigo bietet das erfindungsgemäße Verfahren dadurch deutliche Vorteile, daß die stabile Kristallmodifikation I in farbstarker, brillanter Pigmentform auf direktem Wege hergestellt werden kann, sowie im Hinblick auf Wirtschaftlichkeit und Umweltschutz. Das erfindungsgemäß hergestellte 4,4'-Dimethyl-6,6'-dichlorthioindigo eignet sich zum Färben von Kunststoffen, Lacken und insbesondere von Kosmetika.

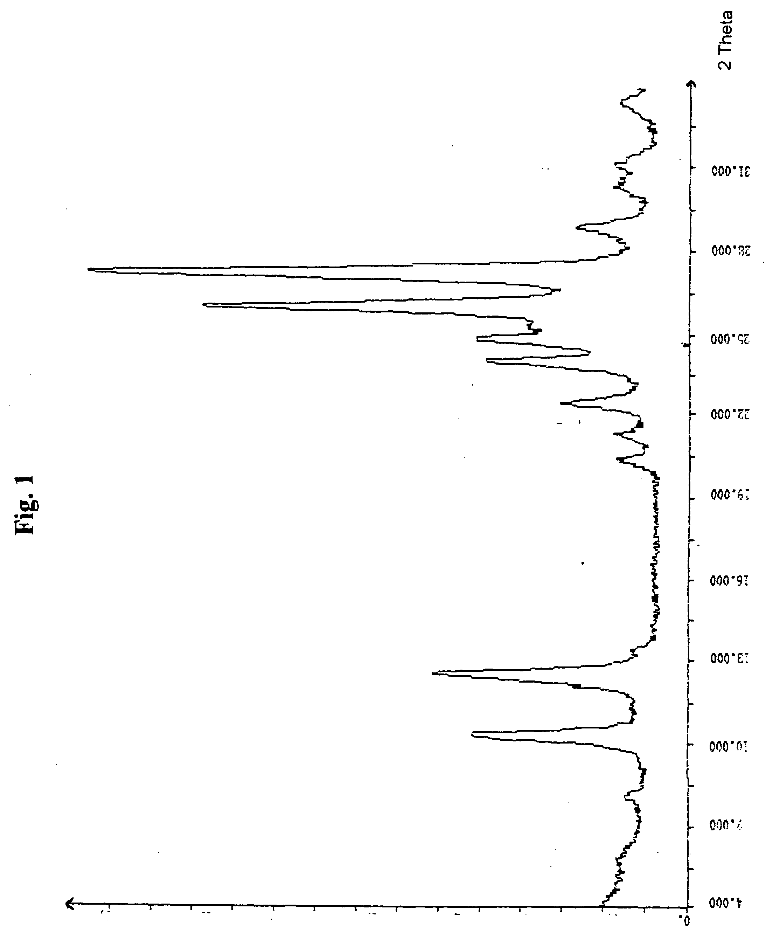

Das mit Cu K_{α-} Strahlung aufgenommene Röntgenbeugungsdiagramm der stabilen Modifikation I ist in Figur 1 wiedergegeben, das der instabilen Kristallmodifikation II in Figur 2. Zur Aufnahme wurde ein rechnergesteuertes Pulverdiffraktometer, Typ D 500, der Firma Siemens eingesetzt.

In den nachstehend aufgeführten Beispielen bedeuten Prozentangaben Gewichtsprozente.

### Mischung 1: 3-Hydroxy-4-methyl-6-chlorthionaphthen, nicht aufgemahlen

49,7 g 3-Hydroxy-4-methyl-6-chlorthionaphthen werden in 750 g entsalztes Wasser eingetragen und 1 Stunde mit einem Blattrührer ohne Anwendung von Scherkräften verrührt.
Die Messung der Teilchengrößeverteilung nach der Coulter-Counter-Methode ergibt folgende statistische Kenngrößen für die Teilchengrößeverteilung:

| | |
|---|---|
| D25 | 22,6 µm |
| D50 | 23,0 µm |
| D75 | 30,7 µm |
| D95 | 42,3 µm |
| Dmax | 28,2 µm |

### Mischung 2: 3-Hydroxy-4-methyl-6-chlorthionaphthen, aufgemahlen

49,7 g 3-Hydroxy-4-methyl-6-chlorthionaphthen werden in 750 g entsalztes Wasser eingetragen und mit einem Ultra-Turrax, (T 25, Leerlaufdrehzahl: 20500/ min der Firma Janke & Kunkel) 3 Stunden bei 25° C aufgemahlen.
Die Messung der Teilchengrößeverteilung nach der Coulter-Counter-Methode ergibt folgende Kenngrößen für die Teilchengrößeverteilung:

| | |
|---|---|
| D25 | 7,7 µm |
| D50 | 13,8 µm |
| D75 | 16,6 µm |
| D95 | 23,9 µm |
| Dmax | 13,7 µm |

### Beispiel 1: Herstellung von 4,4'-Dimethyl-6,6'-dichlorthioindigo aus Mischung 2

Die vorstehend beschriebene Mischung 2 wird unter Stickstoffatmosphäre bei 25°C mit 2,5 g eines Fettalkohol-polyglykolethers (Genapol X 080) versetzt, auf 75°C erhitzt und bei 75°C im Verlauf von 4 Stunden unter Rühren mit einer Mischung von 56,7 g Dinatriumpolysulfid 43 %ig und 31,7 g Natronlauge 50 %ig versetzt. Man rührt zur Vervollständigung der Oxidationsreaktion 4 Stunden bei 75°C nach, setzt dann 1,8 I entsalztes Wasser zu und filtriert die Pigmentsuspension bei 60°C. Der erhaltene Presskuchen wird mit 600 g entsalztem Wasser alkali- und sulfidfrei gewaschen und bei 80°C im Vakuum [26664 Pa (200 torr)]bis zur Gewichtskonstanz getrocknet.
Ausbeute: 47,5 g (96,6 % der theoret. Ausbeute) brillantrotes Pulver Kristall-Modifikation: I (s. Figur 1)

### Beispiel 2: Herstellung von 4,4'-Dimethyl-6,6'-dichlorthioindigo aus Mischung 2

Man verfährt nach den Angaben des Beispiels 1, setzt jedoch statt 2,5 g Genapol X080 2,5 g eines Fettalkohol-polyglykolethers (Genapol C 200) zu.
Ausbeute: 47,3 g (96,2 % der theoret. Ausbeute) brillantrotes Pulver
Kristall-Modifikation: I (s. Figur 1)

### Vergleichsbeispiel A: Herstellung von 4,4'-Dimethyl-6,6'-dichlorthioindigo aus Mischung

Mischung 1 (49,7 g 3-Hydroxy-4-methyl-6-chlorthionaphthen, nicht aufgemahlen, in 750 g entsalztem Wasser) wird nach den Angaben des Beispiels 1 mit einer Mischung von 56,7 g Dinatriumpolysulfid und 31,7 g Natronlauge 50 % in Gegenwart von 2,5 g Genapol X080 bei 75°C in das Pigment der Formel übergeführt. Nach der in Beispiel 1 angegebenen Aufarbeitung erhält man das Pigment in folgender Ausbeute und Kristall-Modifikation:
Ausbeute : 47,0 g (95,6 % der theoret. Ausbeute) rotes Pulver.
Kristall-Modifikation: II (s. Figur 2)

### Vergleichsbeispiel B: Herstellung von 4,4'-Dimethyl-6,6'-dichlorthioindigo aus Mischung 1

Man verfährt analog Vergleichsbeispiel A, setzt jedoch statt 750 g Wasser eine Mischung von 750 g Wasser und 75 g Ethanol, und statt 2,5 g Genapol X080 5,0 g einer technischen Harzseife (Resol 50) ein. Man erhält das Pigment der Formel I in folgender Ausbeute und Kristall-Modifikation:
Ausbeute: 47,1 g (95,8 % der theoret. Ausbeute) rotes Pulver
Kristall-Modifikation: II (s. Figur 2)

### Anwendungstechnische Prüfungen

Die nach Beispiel 1 und 2 sowie Vergleichsbeispiel A und B erhaltenen Pigmente werden in Leinölfirnis dispergiert, mit Titandioxid im Verhältnis 1 : 10 aufgehellt und farbmetrisch gegen einen für den Kosmetik-Bereich festgelegten Standard für D & C Red 30 in Bezug auf Farbstärke und Farbton verglichen.
In Tabelle 1 sind die Prüfergebnisse zusammengestellt.

**Tabelle 1**

| Pigment nach | Kristallmodifikation | Farbstärke | Farbton / Reinheit |
|---|---|---|---|
| Beispiel 1 | I | 106 % | Spur blauer / etwas reiner |
| Beispiel 2 | I | 115 % | vergleichbar / etwas reiner |
| Vergleichsbsp. A | II | 85 % | deutlich gelber / deutlich trüber |
| Vergleichsbsp.B | II | 90 % | deutlich gelber / deutlich trüber |

In Tabelle 2 sind weitere Beispiele angeführt, welche nach den Angaben des Beispiels 1 entsprechend dem erfindungsgemäßen Verfahren aus der nach Aufmahlen des 3-Hydroxy-4-methyl-6-chlor/thionaphthens erhaltenen Mischung 2 erhalten werden können.

In der Tabelle 2 sind außerdem die nach Aufhellung mit TiO₂ (Verhältnis 1 : 10) gemessene Farbstärke des Pigments gegen den in Tabelle 1 gewählten Standard D & C Red 30 sowie den nach der Aufhellung mit TiO₂ (Verhältnis 1 : 10) erhaltenen Farbton gegen den in Tabelle 1 gewählten Standard D & C Red 30 angegeben.

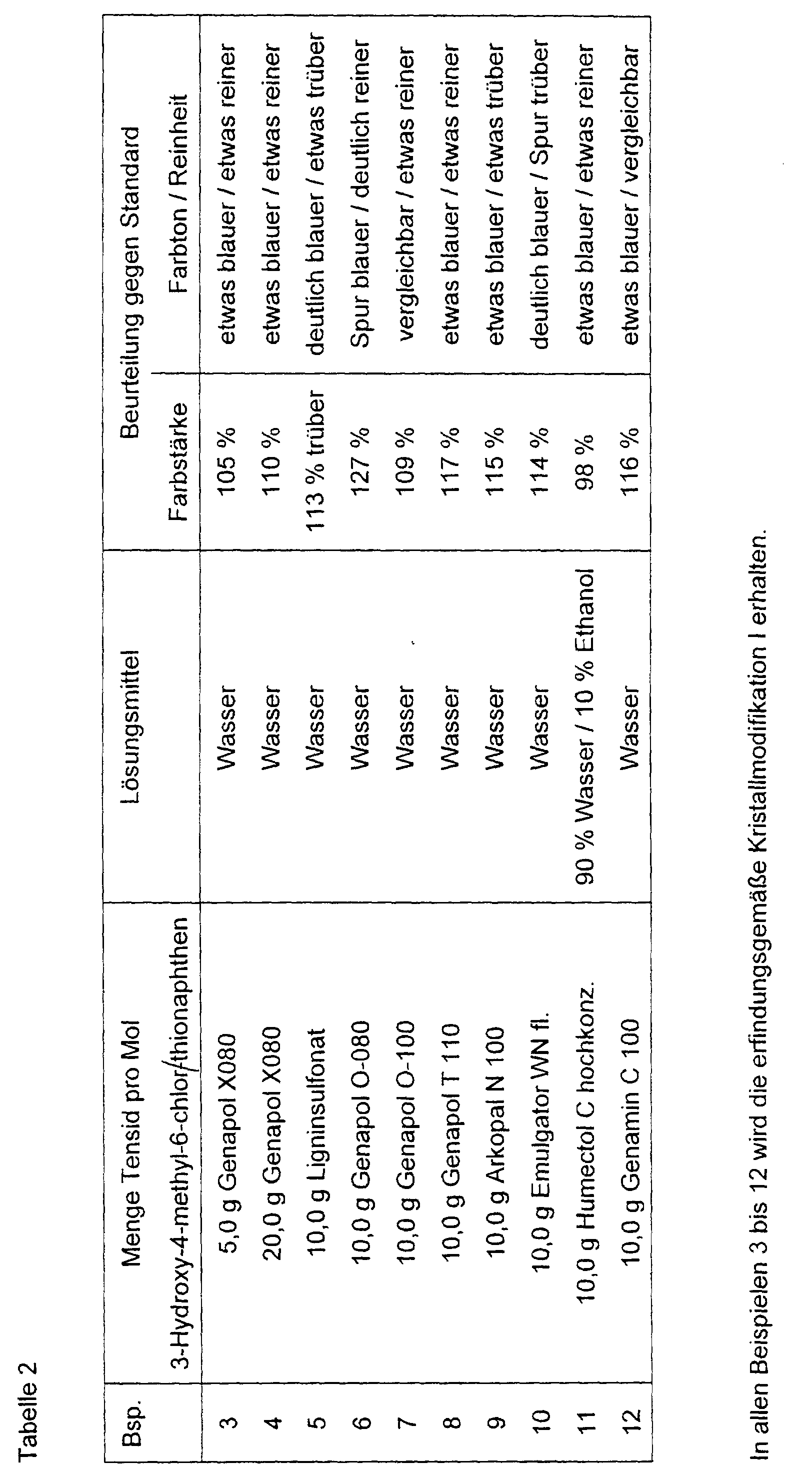

## Patentansprüche

1. Verfahren zur Herstellung von 4,4'-Dimethyl-6,6'-dichlor/thioindigo der Formel (I) 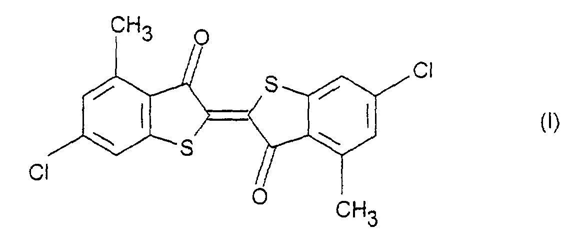 in der stabilen Kristallmodifikation I, welche im Röntgenbeugungsdiagramm (CuK_{α}- Strahlung) Linien bei folgenden Beugungswinkeln 2 θ (°) aufweist:
Linien starker Intensität: 25,99; 27,26
Linien mittlerer Intensität: 10,27; 12,48; 22,39; 23,91; 24,82; 28,87,
**dadurch gekennzeichnet, daß** 3-Hydroxy-4-methyl-6-chlorthionaphthen der Formel (II) 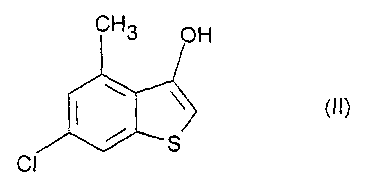 eine mittlere Teilchengröße D₅₀ von maximal 20 µm aufweist und mit einem Oxidationsmittel zu dem Pigment der Formel I oxidiert wird.

2. Verfahren nach Anspruch 1, **dadurch gekennzeichnet, daß** die Verbindung der Formel (II) eine mittlere Teilchengröße D₅₀ von maximal 15 µm besitzt.

3. Verfahren nach Anspruch 1 oder 2, **dadurch gekennzeichnet, daß** das Oxidationsmittel ein Eisen(III)-Salz, eine Nitroverbindung, Sauerstoff, Ozon, ein Percarbonat, ein Perborat oder ein Polysulfid ist.

4. Verfahren nach mindestens einem der Ansprüche 1 bis 3,
**dadurch gekennzeichnet, daß** das Oxidationsmittel ein Alkalipolysulfid, vorzugsweise Dinatriumpolysulfid ist.

5. Verfahren nach mindestens einem der Ansprüche 1 bis 4, **dadurch gekennzeichnet, daß** die Oxidation in Gegenwart eines Tensids oder eines Tensid-Gemisches durchgeführt wird.

6. Verfahren nach Anspruch 5, **dadurch gekennzeichnet, daß** ein oder mehrere nichtionogene Tenside eingesetzt werden.

7. Verfahren nach Anspruch 6, **dadurch gekennzeichnet, daß** man als nichtionogene Tenside Ethoxylierungsprodukte von Fettaminen, Fettamiden, Fettalkoholen, Fettsäuren, Alkylphenolen oder Polypropylenglykolen einsetzt.

8. Verfahren nach einem der mehreren der Ansprüche 1 bis 7, **dadurch gekennzeichnet, daß** die Oxidation bei einer Temperatur von 30 bis 150°C, vorzugsweise 50 bis 100°C, durchgeführt wird.

9. Verfahren nach einem oder mehreren der Ansprüche 1 bis 8, **dadurch gekennzeichnet, daß** die Oxidation in einem Gemisch aus Wasser und einem oder mehreren mit Wasser teilweise oder vollständig mischbaren organischen Lösungsmitteln durchgeführt wird.

10. Verfahren nach einem oder mehreren der Ansprüche 1 bis 8, **dadurch gekennzeichnet, daß** die Oxidation in Wasser durchgeführt wird.

## Claims

1. A process for the preparation of 4,4'-dimethyl-6,6'-dichlorothioindigo of the formula (I) 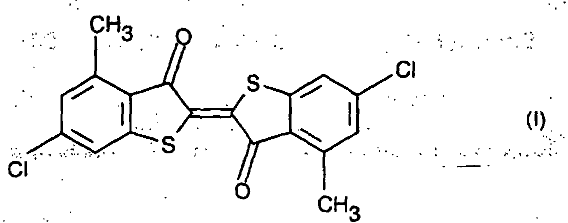 in the stable crystal modification I, which, in the X-ray diffraction pattern (CuK_{α} - radiation), has lines at the following diffraction angles 2 θ (°) :
lines of high intensity: 25.99; 27.26
lines of moderate intensity: 10 . 27 ;. 12 .48; 22.39; 23.91; 24.82; 28.87,
wherein 3-hydroxy-4-methyl-6-chlorothionaphthene of the formula (II) 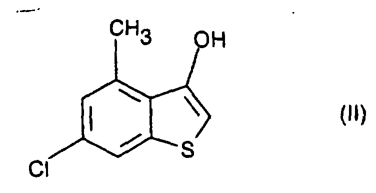 has a mean particle size D₅₀ of at most 20 *µ*m and is oxidized using an oxidizing agent to give the pigment of the formula I.

2. The process as claimed in claim 1, wherein the compound of the formula (II) has a mean particle size D₅₀ of at most 15 *µ*m.

3. The process as claimed in claim 1 or 2, wherein the oxidizing agent is an iron (III) salt, a nitro compound, oxygen, ozone, a percarbonate, a perborate or a polysulfide.

4. The process as claimed in at least one of claims 1 to 3, wherein the oxidizing agent is an alkali metal polysulfide, preferably disodium polysulfide.

5. The process as claimed in at least one of claims 1 to 4, wherein the oxidation is carried out in the presence of a surfactant or a surfactant mixture.

6. The process as claimed in claim 5, wherein one or more nonionogenic surfactants are used.

7. The process as claimed in claim 6, wherein the nonionogenic surfactants used are ethoxylation products of fatty amines, fatty amides, fatty alcohols, fatty acids, alkylphenols or polypropylene glycols.

8. The process as claimed in one or more of claims 1 to 7, wherein the oxidation is carried out at a temperature of from 30 to 150°C, preferably 50 to 100°C.

9. The process as claimed in one or more of claims 1 to 8, wherein the oxidation is carried out in a mixture of water and one or more organic solvents which are partially or completely miscible with water.

10. The process as claimed in one or more of claims 1 to 8, wherein the oxidation is carried out in water.

## Revendications

1. Procédé pour la préparation de 4,4'-diméthyl-6,6'-dichlorothioindigo de formule (I) 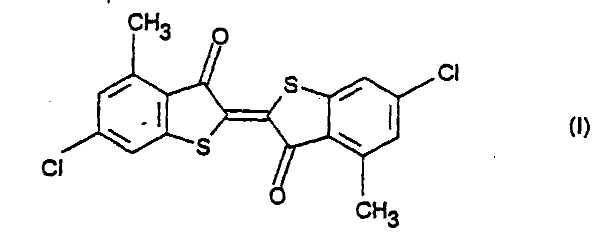 dans la modification cristalline I stable qui présente dans le diagramme de diffraction des rayons X (raie CuK_{α}) des raies spectrales aux angles de diffraction suivants 2θ(°) :
Raies de forte intensité : 25,99 ; 27,26
Raies d'intensité moyenne : 10,27 ; 12,48 ; 22,39 ; 23,91 ; 24,82 ; 28,87,
**caractérisé en ce que** le 3-hydroxy-4-méthyl-6-chlorothionaphtène de formule (II) 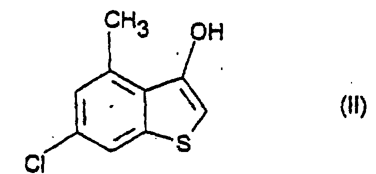 présente une taille moyenne de particules D₅₀ de 20 µm au maximum et est oxydé avec un agent d'oxydation pour donner le pigment de formule I.

2. Procédé selon la revendication 1, **caractérisé en ce que** le composé de formule (II) possède une taille moyenne de particules D₅₀ de 15 µm au maximum.

3. Procédé selon la revendication 1 ou 2, **caractérisé en ce que** l'agent d'oxydation est un sel de fer (III), un composé nitro, l'oxygène, l'ozone, un percarbonate, un perborate ou un polysulfure.

4. Procédé selon au moins une des revendications 1 à 3, **caractérisé en ce que** l'agent d'oxydation est un polysulfure de métal alcalin, de préférence le polysulfure de disodium.

5. Procédé selon au moins une des revendications 1 à 4, **caractérisé en ce que** l'oxydation est effectuée en présence d'un agent tensioactif ou d'un mélange d'agents tensioactifs.

6. Procédé selon la revendication 5, **caractérisé en ce qu'**on utilise un ou plusieurs agents tensioactifs non ioniques.

7. Procédé selon la revendication 6, **caractérisé en ce qu'**on utilise comme agents tensioactifs non ioniques les produits éthoxylation d'amines grasses, d'amides gras, d'alcools gras, d'acides gras, d'alkylphénols ou de poly-polypropylèneglycols.

8. Procédé selon une ou plusieurs des revendications 1 à 7, **caractérisé en ce que** l'oxydation est réalisée à une température de 30 à 150°C, de préférence de 50 à 100°C.

9. Procédé selon une ou plusieurs des revendications 1 à 8, **caractérisé en ce que** l'oxydation est réalisée dans un mélange d'eau et d'un ou de plusieurs solvants organiques partiellement ou totalement miscibles à l'eau.

10. Procédé selon une ou plusieurs des revendications 1 à 8, **caractérisé en ce qu'**on effectue l'oxydation dans l'eau.
